# EUROPÄISCHE PATENTSCHRIFT

(11) **EP 3 623 659 B1**
(45) Veröffentlichungstag und Bekanntmachung des Hinweises auf die Patenterteilung: **21.06.2023**
(21) Anmeldenummer: 19197109.2
(22) Anmeldetag: 12.09.2019
(51) Int. Cl.: F16H 37/04, F16H 59/66, F16H 61/70

(54) **NUTZFAHRZEUG, VERFAHREN ZUM SCHALTEN EINES VORGELEGEGETRIEBES EINES ANTRIEBSSTRANGS DES NUTZFAHRZEUGS**
COMMERCIAL VEHICLE, METHOD FOR GEAR CHANGE IN A RANGE-CHANGE GEARBOX OF A TRANSMISSION OF THE COMMERCIAL VEHICLE
VÉHICULE COMMERCIAL, MÉTHODE POUR CHANGEMENT DE VITESSE DANS UNE BOÎTE DE VITESSES À CHANGEMENT DE RÉGIME D'UNE TRANSMISSION DU VÉHICULE COMMERCIAL

(30) Priorität: 13.09.2018 DE 102018007276
(43) Veröffentlichungstag der Anmeldung: 18.03.2020
(73) Patentinhaber: Pallidis, Dimitrios, 78532 Tuttlingen (DE)
(72) Erfinder: Pallidis, Dimitrios, 78532 Tuttlingen (DE)
(74) Vertreter: Westphal, Mussgnug & Partner Patentanwälte mbB

(56) Entgegenhaltungen:
- EP-A1- 3 120 045
- DE-A1-102016 223 016
- US-A1- 2009 165 584

## Beschreibung

Die vorliegende Erfindung betrifft ein Nutzfahrzeug, umfassend einen Antriebsstrang. Darüber hinaus betrifft die Erfindung ein Verfahren zum Schalten eines Vorgelegegetriebes eines derartigen Antriebsstrangs.

Insbesondere im Bestreben, die CO2- und NOX-Emissionen zu reduzieren, sind die Hersteller von Kraftfahrzeugen und insbesondere von Nutzfahrzeugen bestrebt, effizientere Kraftfahrzeuge zu produzieren, die weniger Kraftstoff als bislang verbrauchen und die Luft geringstmöglich verschmutzen. Insbesondere im Betrieb Nutzfahrzeuge wie LKW, die im Fernverkehr eingesetzt werden, kann der Kraftstoffverbrauch dadurch gesenkt werden, dass das maximale Drehmoment bei niedrigen Drehzahlen erreicht wird. Um dies zu erreichen, ist dann, wenn sich das Nutzfahrzeug mit einer Geschwindigkeit von 90 km/h bewegt, eine längere Hinterachsübersetzung erforderlich als serienmäßig vom Hersteller des Nutzfahrzeugs angeboten. Die Hinterachsübersetzung bezeichnet dabei das Übersetzungsverhältnis zwischen der Antriebswelle und den Hinterachsen, das mittels eines Hinterachsgetriebes, welches mit einem Differential zusammenwirkt, bereitgestellt wird. Das Hinterachsgetriebe umfasst dabei ein Ritzel, auch als Radsatz bezeichnet, und ein Tellerrad. Dieses Übersetzungsverhältnis kann nach Kundenwunsch bei der Bestellung des Neufahrzeugs so gewählt werden, dass die Hinterachsübersetzung für das gewünschte Einsatzgebiet passt. Ein wesentliches Kriterium hierfür sind die topographischen Eigenschaften, welche im Einsatzgebiet vorliegen. Unter topographischen Eigenschaften soll im Folgenden insbesondere das Maß der Steigungen, das im Einsatzgebiet vorliegt, verstanden Maß der Steigungen, das im Einsatzgebiet vorliegt, verstanden werden. Darüber hinaus können aber auch die Anzahl der Kurven des Streckenverlaufs und die Schärfe der Kurven bei den topographischen Eigenschaften berücksichtigt werden. Andere Eigenschaften des Streckenverlaufs wie Geschwindigkeitsbegrenzungen oder Anzahl der zur Verfügung stehenden Spuren der Straßen können ebenfalls berücksichtigt werden. Zudem kann auch das Gesamtgewicht des LKW berücksichtigt werden.

Liegt das Einsatzgebiet hauptsächlich im Flachland, so weisen die Steigungen ein geringes Maß auf. Liegt das Einsatzgebiet in einer Mittelgebirgslandschaft, so weisen die Steigungen ein mittleres Maß auf. Liegt das Einsatzgebiet in einer Hochgebirgslandschaft, so weisen die Steigungen ein hohes Maß auf. Die einmal gewählte Hinterachsübersetzung kann zumindest mit einem vertretbaren Aufwand nicht mehr geändert werden.

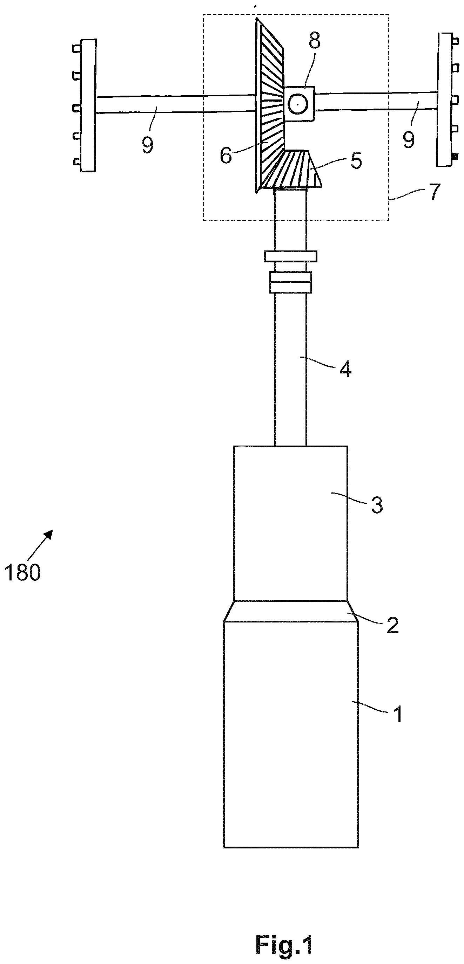

Obwohl moderne Getriebe typischerweise über eine Anzahl von 5 bis 16 Gängen verfügen, passt die Hinterachsübersetzung nicht für jedes Einsatzgebiet und dessen topografische Bedingungen. Ein konventioneller Antriebsstrang 180 bei Nutzfahrzeugen gemäß dem in Figur 1 gezeigten Stand der Technik umfasst einen Motor 1, eine Kupplung 2, ein Getriebe 3, eine Antriebswelle 4 und ein Hinterachsgetriebe 7. Das Hinterachsgetriebe 7 umfasst ein Ritzel 5 (auch als Radsatz bezeichnet), welches drehfest an der Antriebswelle 4 befestigt ist, und ein Tellerrad 6, welches mit dem Ritzel 5 in kämmendem Eingriff steht. Das Tellerrad 6 wirkt mit einem Differential 8 zusammen, welches das Drehmoment auf jeweils eine Hinterachse 9 verteilt.

Derartige Antriebsstränge sind aus der US 2 858 714 A, der US 2015/0126320 A1, der DE 10 2016 223 016 A1, der US 2009/165 584 A1, der EP 3 120 045 A1 und der US 2013/0231813 A1 bekannt.

Wie erwähnt, kann man auch bei modernen Nutzfahrzeugen das Übersetzungsverhältnis zwischen dem Ritzel 5 und dem Tellerrad 6 nicht ändern. Man kann nur vor der Produktion des Nutzfahrzeugs die Hinterachsübersetzung einmalig abstimmen und bestellen. Einzig im Getriebe können die Übersetzungsverhältnisse geändert werden. Die einmal ausgewählte Hinterachsübersetzung ist nicht immer für jede Route geeignet, insbesondere dann, wenn der Streckenverlauf beispielsweise nicht nur durch das Flachland führt, sondern auch durch das Mittelgebirge, was insbesondere bei längere Fahrten im Fernverkehr häufig der Fall ist. Hat sich der Käufer des betreffenden Nutzfahrzeugs dafür entschieden, die Hinterachsübersetzung für den Einsatz im Flachland zu wählen, führt die Strecke jedoch durch ein Mittelgebirge, so nimmt die Gangschaltzahlen zu, weil alle Gänge von der langen Hinterachsübersetzung abhängig sind. Infolgedessen nimmt der Kraftstoffverbrauch deutlich zu.

Aufgabe der vorliegenden Erfindung ist es, ein Nutzfahrzeug mit einem Antriebsstrang umfassend ein Vorgelegegetriebe vorzuschlagen, dessen Hinterachsübersetzung sich flexibel auf die momentan vorliegende topographische Eigenschaft der Umgebung des Nutzfahrzeugs anpassen lässt. Darüber hinaus liegt einer Ausbildung der Erfindung die Aufgabe zugrunde, ein Verfahren zum Schalten des Vorgelegegetriebes eines derartigen Antriebsstrangs bereitzustellen.

Diese Aufgabe wird mit den in den Ansprüchen 1 und 5 angegebenen Merkmalen gelöst. Vorteilhafte Ausführungsformen sind Gegenstand der Unteransprüche.

Nach Maßgabe einer weiteren Ausführungsform stellt das Vorgelegegetriebe ein Übersetzungsverhältnis zwischen der Antriebswelle und den Hinterachsen von zwischen 1:2 und 1:4,5 bereit. Es hat sich herausgestellt, dass sich bei Übersetzungsverhältnissen im angegebenen Bereich der Kraftstoffverbrauch bei den meisten, üblicherweise vorliegenden topographischen Eigenschaften spürbar senken lässt. Beim angegebenen Bereich des Übersetzungsverhältnisses ist zu berücksichtigen, dass LKW eine Höchstgeschwindigkeit von 90 km/h allein schon aufgrund von gesetzlichen Bestimmungen nicht überschreiten dürfen.

In einer weitergebildeten Ausführungsform kann das Vorgelegegetriebe eine erste Stufe, eine zweite Stufe und eine dritte Stufe aufweisen, wobei
- bei einer ersten Variante des Vorgelegegetriebes
   o die erste Stufe ein Übersetzungsverhältnis von 1:2,21
   o die zweite Stufe ein Übersetzungsverhältnis von 1:2,38 und
   o die dritte Stufe ein Übersetzungsverhältnis von 1:2,47 und
- bei einer zweiten Variante des Vorgelegegetriebes
   o die erste Stufe ein Übersetzungsverhältnis von 1:2,38
   o die zweite Stufe ein Übersetzungsverhältnis von 1:2,47 und
   o die dritte Stufe ein Übersetzungsverhältnis von 1:2,64,
- jeweils zwischen der Antriebswelle und den Hinterachsen bewirken.

Die Übersetzungsverhältnisse beziehen sich auf die Antriebswelle und die Hinterachsen und nicht auf das Vorgelegegetriebe als solches. Es hat sich gezeigt, dass drei Stufen einerseits den technischen Aufwand zum Bereitstellen des vorschlagsgemäßen Antriebsstrangs gering halten, andererseits hat sich die Anzahl von drei Stufen als ausreichend erwiesen, um den Kraftstoffverbrauch spürbar zu senken. Mit den angegebenen Übersetzungsverhältnissen gelingt dies besonders effektiv.

Nach Maßgabe einer weiteren Ausführungsform sind die Stufen des Vorgelegegetriebes mittels Synchronringen synchronisiert. In dieser Ausführungsform ist es möglich, das Vorgelegegetriebe während der Fahrt zu schalten. Insbesondere dann, wenn die Schalteinrichtung automatisch vom Navigationssystem betätigt wird, muss der Fahrer des Nutzfahrzeugs von sich aus keine weiteren Aktionen mehr führen. Es ist aber genauso gut möglich, ein nicht-synchronisiertes Vorgelegegetriebe zu verwenden. In diesem Fall kann der Fahrer den Schaltvorgang nur dann vornehmen, wenn das Nutzfahrzeug steht. Auch dann, wenn der Schaltvorgang vom Navigationssystem veranlasst wird, muss das Fahrzeug ebenfalls stehen. Die Möglichkeit, das Vorgelegegetriebe während der Fahrt zu schalten, ist insofern sehr vorteilhaft, als dass ein Anhalten des Nutzfahrzeugs nicht notwendig ist. Folglich kann der Schaltvorgang genau dann durchgeführt werden, wenn das Nutzfahrzeug den einen Streckenabschnitt verlässt und in den folgenden Streckenabschnitt eintritt. Um die Dauer der Fahrt und den Kraftstoffverbrauch niedrig wie möglich zu halten, ist man bestrebt, ein Anhalten so weit wie möglich zu verhindern. Insbesondere auf Autobahnen ist ein Anhalten nur in bestimmten Abständen möglich. Insofern können der Kraftstoffverbrauch und die Dauer der Fahrt aufgrund der Möglichkeit, das Vorgelegegetriebe während der Fahrt schalten zu können, gegenüber einem nicht-synchronisiert Vorgelegegetriebes weiter verringert werden.

Ein nicht beanspruchtes Ausführungsbeispiel betrifft eine mehrstufige Hinterachsübersetzung für schwere und leichte Nutzfahrzeuge, wobei die mehrstufige Hinterachsübersetzung für Nutzfahrzeuge als ein zusätzliches, separates Gangwechselgetriebe am Hinterachsgehäuse eingebaut ist. Die Hinterachsübersetzung kann mit einem Hinterachsgetriebe und mit einem hiermit zusammenwirkenden Vorgelegegetriebe bereitgestellt werden.

Ein fortgebildetes Ausführungsbeispiel der Hinterachsübersetzung zeichnet sich dadurch aus, dass beim Differential für schwere und leichte Nutzfahrzeuge die mehrstufige Hinterachsübersetzung als eine unabhängige Getriebevorrichtung im Verhältnis mit einem konventionellen Getriebe funktionieren kann und die Hinterachsübersetzung unabhängig vom konventionellen Getriebe am effizienten nach Bedarf gewechselt werden kann. Nach Maßgabe eines weiteren Ausführungsbeispiels ist die mehrstufige Hinterachsübersetzung am meisten in Fahrt mit dem letzten Gang (12. Gang), wobei das Verhältnis zwischen Geschwindigkeit und Motordrehzahlen unabhängig vom konventionellen Getriebe wechseln kann und die sparsamste Hinterachsübersetzung nach Bedarf, beispielsweise gemäß der topografischen Route, Flachland oder Mittelgebirgslandschaft mit Steigungen, oder das Gesamtgewicht, ausgewählt werden kann, um die Drehzahlen des Motors in einem kraftstoffverbraucharmen Bereich zu halten.

Gemäß eines weitergeführten Ausführungsbeispiels kann die mehrstufige Hinterachsübersetzung auch als Splitter funktionieren und die Übersetzung alle Gänge des konventionalen Getriebes wechseln.

Einem weiterentwickelten Ausführungsbeispiel zufolge kann die mehrstufige Hinterachsübersetzung zusammen mit einem konventionellen automatisierten Getriebe und einem Schaltgetriebe einem gemeinsamen Verfahren zur Reduktion des Kraftstoffverbrauchs folgen, wobei das Verfahren die folgenden Verfahrensschritte aufweist:
Entwicklung einer gemeinsamen kraftstoffverbrauchsarmen Schaltstrategie derart, dass bei bestimmten topografischen Bedingungen, wie bei flachen oder bei steigenden Umgebungen die für diese Route passende Hinterachsübersetzung ausgewählt wird. Hierbei kann eine Verbindung und Kooperation der mehrstufigen Hinterachsübersetzung mit einem konventionellen topografischen GPS-System so eingesetzt werden, dass die Topografieneigung vorausschauend erkannt wird um die passende Hinterachsübersetzung bei der mehrstufigen Hinterachsübersetzung auszuwählen, um Kraftstoff und Energie zu sparen.

Beispielhafte Ausführungsformen der Erfindung werden im Folgenden unter Bezugnahme auf die beigefügten Zeichnungen näher erläutert. Es zeigen
- Figur 1: einen Antriebsstrang eines Nutzfahrzeugs nach dem Stand der Technik,
- Figur 2: ein Ausführungsbeispiel eines vorschlagsgemäßen Antriebsstrangs eines Nutzfahrzeugs,
- Figur 3: eine Explosionsdarstellung der Antriebswelle im Bereich des in Figur 2 dargestellten Vorgelegegetriebes,
- Figur 4A: Synchronringe des in Figur 2 dargestellten Vorgelegegetriebes anhand einer isolierten Seitenansicht,
- Figur 4B: Schiebemuffen des in Figur 2 dargestellten Vorgelegegetriebes anhand einer isolierten Seitenansicht,
- Figur 4C: die in Figur 4B dargestellten Schiebemuffen anhand einer isolierten Draufsicht,
- Figur 5: Schaltachsen zum Betätigen der in den Figuren 4B und 4C dargestellten Schiebemuffen,
- Figur 6: eine prinzipielle Draufsicht auf ein Nutzfahrzeug, welches einen vorschlagsgemäßen Antriebsstrang aufweist,
- Figur 7: eine prinzipielle Darstellung von drei verschiedenen topographischen Eigenschaften, und
- Figur 8: eine prinzipielle Darstellung eines Streckenverlaufs, welcher in verschiedene Streckenabschnitte unterteilt ist.

In Figur 1 ist ein Antriebsstrang 180 nach dem Stand der Technik dargestellt, der bei Nutzfahrzeugen häufig verbaut wird. Der Antriebsstrang 180 ist mit einem Motor 1 mittels einer zum Antriebsstrang 180 gehörigen Kupplung 2 verbunden und umfasst ein Getriebe 3, eine Antriebswelle 4 und ein Hinterachsgetriebe 7. Das Hinterachsgetriebe 7 umfasst ein Ritzel 5 (auch als Radsatz bezeichnet), welches drehfest an der Antriebswelle 4 befestigt ist, und ein Tellerrad 6, welches mit dem Ritzel 5 in kämmendem Eingriff steht. Das Tellerrad 6 wirkt mit einem Differential 8 zusammen, welches das Drehmoment auf jeweils eine Hinterachse 9 verteilt. Auch wenn das Getriebe 3 bis zu 12 Gänge aufweisen kann, kann das Übersetzungsverhältnis des Hinterachsgetriebes 7 nicht geändert werden.

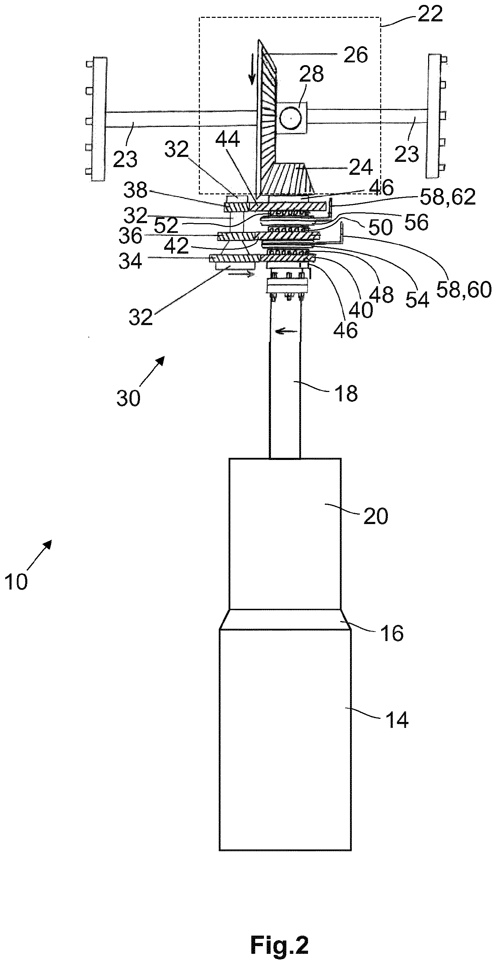

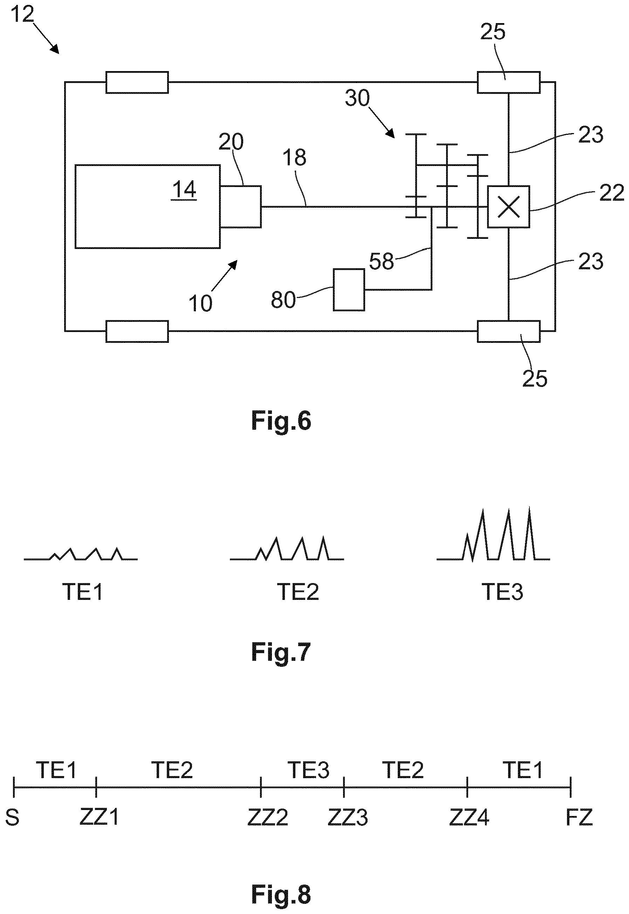

In Figur 2 ist ein Ausführungsbeispiel eines erfindungsgemäßen Antriebsstrangs 10 eines Nutzfahrzeugs 12 (siehe Figur 6) anhand einer prinzipiellen Darstellung gezeigt. Der grundsätzliche Aufbau des erfindungsgemäßen Antriebsstrangs 10 gleicht weitgehend demjenigen, welcher in Figur 1 dargestellt ist. Das Nutzfahrzeug 12 umfasst einen Motor 14, welcher über eine Kupplung 16, welche zum Antriebsstrang 10 gehört, mit demselben verbindbar ist. Die Kupplung 16 kann beispielsweise als eine Reibkupplung, als eine Doppelkupplung oder als ein Drehmomentwandler ausgeführt sein. Der Antriebsstrang 10 umfasst weiterhin eine Antriebswelle 18, welche mit einem Hauptgetriebe 20 zusammenwirkt. Je nach Ausgestaltung des Nutzfahrzeugs 12 umfasst das Hauptgetriebe 20 typischerweise zwischen 5 und 12 Gänge. Die Antriebswelle 18 wirkt mit einem Hinterachsgetriebe 22 zusammen, welche die Drehbewegung der Antriebswelle 18 an jeweils eine Hinterachse 23 und folglich an das betreffende Hinterrad 25 des Nutzfahrzeugs 12 überträgt (Figur 6). Das Hinterachsgetriebe 22 umfasst dabei ein mit der Antriebswelle 18 verbundenes Ritzel 24, das mit einem Tellerrad 26 in kämmendem Eingriff steht. Das Tellerrad 26 wiederum wirkt mit einem Differential 28 zusammen, das die Drehung des Tellerrad 26 an die beiden Hinterachsen 23 weitergibt.

Zwischen dem Hauptgetriebe 20 und dem Hinterachsgetriebe 22 ist ein Vorgelegegetriebe 30 angeordnet, welches ebenfalls mit der Antriebswelle 18 zusammenwirkt. Das Vorgelegegetriebe 30 weist eine Vorgelegewelle 32 auf, welche parallel zur Antriebswelle 18 verläuft. Im dargestellten Ausführungsbeispiel weist die Vorgelegewelle 32 ein erstes Vorgelege-Zahnrad 34, ein zweites Vorgelege-Zahnrad 36 und ein drittes Vorgelege-Zahnrad 38 auf. Auf der Antriebswelle 18 sind ein erstes Antriebswellenzahnrad 40, ein zweites Antriebswellenzahnrad 42 und ein drittes Antriebswellenzahnrad 44 angeordnet. Dabei stehen das erste Vorgelege-Zahnrad 34 mit dem ersten Antriebswellenzahnrad 40, das zweite Vorgelege-Zahnrad 36 mit dem zweiten Antriebswellenzahnrad 42 und das dritte Vorgelege-Zahnrad 38 mit dem dritten Antriebswellenzahnrad 44 in kämmendem Eingriff.

Das erste Antriebswellenzahnrad 40 ist drehfest mit der Antriebswelle 18 verbunden, das zweite Antriebswellenzahnrad 42 und das dritte Antriebswellenzahnrad 44 sind jeweils mit einem Kugellager 46 drehbar auf der Antriebswelle 18 gelagert.

Das Vorgelegegetriebe 30 umfasst weiterhin einen ersten Synchronring 48, einen zweiten Synchronring 50 und einen dritten Synchronring 52. Die Synchronringe 48, 50, 52 sind drehbar und axial verschiebbar auf der Antriebswelle 18 gelagert und weisen jeweils einen kegelförmigen Abschnitt auf (siehe Fiugren 3 und 4A). Die Antriebswellenzahnräder 40, 42, 44 weisen einen entsprechenden Synchronkegel auf (nicht dargestellt). Darüber hinaus umfasst das Vorgelegegetriebe 30 eine erste Schiebemuffe 54 und eine zweite Schiebemuffe 56, welche axial verschiebbar auf der Antriebswelle 18 gelagert und gleichzeitig drehfest mit der Antriebswelle 18 verbunden sind. Zum axialen Verschieben der ersten Schiebemuffe 54 und der zweite Schiebemuffe 56 dient eine Schalteinrichtung 58, welche im dargestellten Beispiel eine erste Schaltachse 60 und eine zweite Schaltachse 62 umfasst.

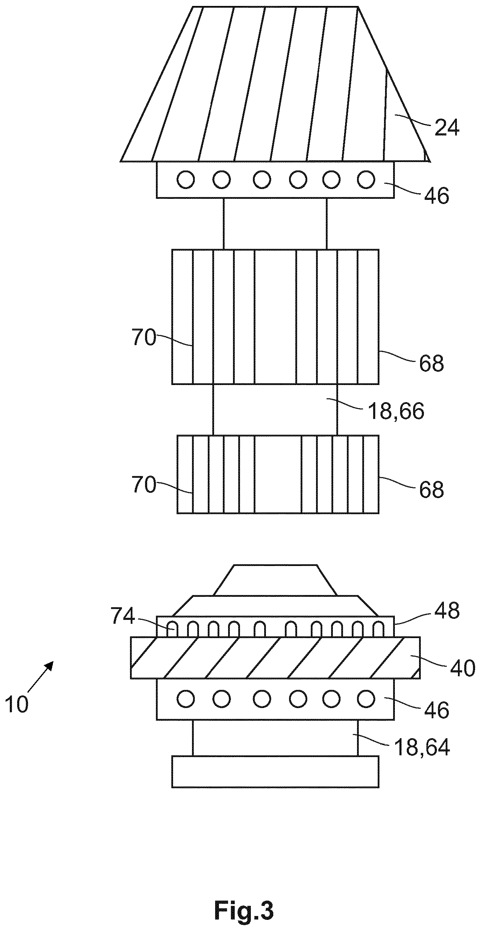

In der Figur 3 ist der Teil der Antriebswelle 18 dargestellt, welcher sich im Bereich des Vorgelegegetriebes 30 befindet. Hieraus geht hervor, dass die Antriebswelle 18 im Bereich des Vorgelegegetriebes 30 in eine Eingangswelle 64 und eine hiervon getrennte Ausgangswelle 66 unterteilt ist. Das erste Antriebswellenzahnrad 40 ist dabei auf der Eingangswelle 64 angeordnet, während das zweite Antriebswellenzahnrad 42 und das dritte Antriebswellenzahnrad 44 auf der Ausgangswelle 66 angeordnet sind. Auch das Ritzel 24 ist auf der Ausgangswelle 66 angeordnet und mit dieser drehfest befestigt. Im Ausgangszustand ist somit eine Übertragung der Drehbewegung der Eingangswelle 64 auf die Ausgangswelle 66 nicht möglich.

Um eine Übertragung der Drehbewegung zu ermöglichen, wird die erste Schiebemuffe 54 mittels der ersten Schaltachse 60 zum ersten Synchronring 48 hin bewegt. Der erste Synchronring 48 wird von der ersten Schiebemuffe 54 zum ersten Antriebswellenzahnrad 40 gedrückt. Dabei werden die Drehzahlen der Eingangswelle 64 und der ersten Schiebemuffe 54 infolge des Zusammenwirkens des kegelförmigen Abschnitts und des Synchronkegels angeglichen, so dass die erste Schiebemuffe 54 über entsprechende Verzahnungen formschlüssig mit dem ersten Antriebswellenzahnrad 40 verbunden werden kann. In diesem Fall sind die Eingangswelle 64 und die Ausgangswelle 66 direkt miteinander verbunden, so dass die Drehzahl der Antriebswelle 18 ohne eine vom Vorgelegegetriebe 30 bereitgestellte Übersetzung direkt auf das Ritzel 24 übertragen wird. Dieser Zustand entspricht einer ersten Stufe des Vorgelegegetriebes 30.

Um das Vorgelegegetriebe 30 in eine andere Stufe zu schalten, wird die erste Schiebemuffe 54 wieder in den Ausgangszustand zurückgestellt. Gleichzeitig wird die zweite Schiebemuffe 56 gemäß den obigen Erläuterungen zum zweiten Antriebswellenzahnrad 42 hin verschoben. In diesem Zustand verläuft der Drehmomentfluss von der Eingangswelle 64 über das erste Antriebswellenzahnrad 40 auf das erste Vorgelege-Zahnrad 34 und von dort auf das zweite Vorgelege-Zahnrad 36 und hiervon zurück auf das zweite Antriebswellenzahnrad 42. Dieser Zustand entspricht einer zweiten Stufe des Vorgelegegetriebes 30 mit einer entsprechenden Übersetzung.

Wie sich aus der Figur 2 entnehmen lässt, lässt sich die zweite Schiebemuffe 56 entsprechend auch zum dritten Antriebswellenzahnrad 44 hin bewegen. Der Drehmomentfluss verläuft nun von der Eingangswelle 64 über das erste Antriebswellenzahnrad 40 auf das erste Vorgelege-Zahnrad 34 und von dort auf das dritte Vorgelege-Zahnrad 38, von wo aus der Drehmomentfluss über das dritte Antriebswellenzahnrad 44 zum Ritzel 24 erfolgt. Dieser Zustand entspricht einer dritten Stufe des Vorgelegegetriebes 30, in welchem eine entsprechende Übersetzung vorliegt.

Die somit zwischen der Antriebswelle 18 und den beiden Hinterachsen realisierbaren Übersetzungsverhältnisse liegen im Bereich von 1:2 bis 1:4,5.

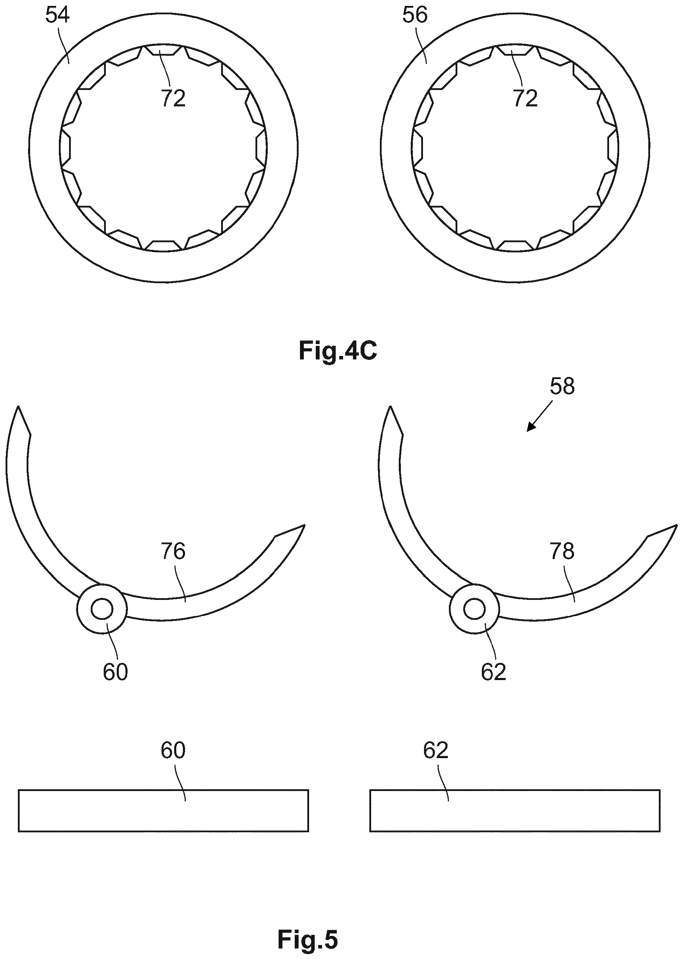

Bezugnehmend auf die Figur 3 ist anzumerken, dass auf die Darstellung der Schiebemuffen 54, 56 nun und der hiermit verbundenen Schaltachsen verzichtet worden ist. Man kann erkennen, dass auf der Ausgangswelle 66 zwei Naben 68, auch als Führungsmuffen bezeichnet, angeordnet sind, welche drehfest mit der Ausgangswelle 66 verbunden sind. Diese Naben 68 weisen eine Außenverzahnung 70 auf, entlang welcher die zugeordneten Schiebemuffen 54, 56 mit einer entsprechend ausgestalteten Innenverzahnung 72 (Figur 4C) axial verschiebbar sind. Die Schiebemuffen 54, 56 können den Kraft-und Drehmomentfluss zwischen der Ausgangswelle 66 und dem zweiten Antriebswellenzahnrad 42 und den dritten Antriebswellenzahnrad 44 in Abhängigkeit von ihrer axialen Position herstellen oder diesen unterbrechen.

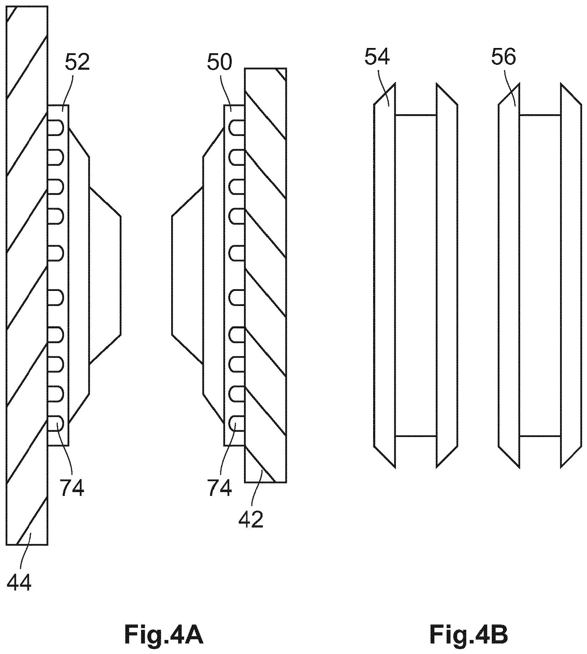

In der Figur 4A sind zwei der Synchronringe 48, 50, 52 separat dargestellt. In Figur 4B sind die beiden Schiebemuffen 54, 56 anhand einer Seitenansicht und in Figur 4C anhand einer Draufsicht gezeigt. In Figur 4C ist die bereits erwähnte Innenverzahnung 72 zu erkennen, welche mit der Außenverzahnung 70 der ersten und der zweiten Nabe 68, welche in Figur 3 zu sehen sind, in Eingriff gebracht werden können. Darüber hinaus ist zu erkennen, dass die in Figur 4A dargestellten Synchronringe 48, 50, 52 eine Außenverzahnung 74 aufweisen, in welche die Innenverzahnung 72 der Schiebemuffe 54, 56 ebenfalls in Eingriff gebracht werden kann.

Aus Figur 5 lassen sich Einzelheiten des Aufbaus der Schalteinrichtung 58 entnehmen. Die Schalteinrichtung 58 weist die bereits erwähnte erste Schaltachse 60 auf, welche mit einem ersten Schaltschieber 76 verbunden ist. Die erste Schaltachse 60 und der erste Schaltschieber 76 dienen dazu, die erste Schiebemuffe 54 axial zur Antriebswelle 18 zu verschieben. Entsprechend dienen die zweite Schaltachse 62 und der zweite Schaltschieber 78 zum axialen Verschieben der zweiten Schiebemuffe 56 axial auf der Antriebswelle 18.

Figur 6 zeigt eine prinzipielle Draufsicht auf ein Nutzfahrzeug 12, welches mit einer Ausführungsform eines vorschlagsgemäßen Antriebsstrangs 10 ausgerüstet ist. Der prinzipielle Aufbau des Antriebsstrangs 10 entspricht demjenigen, welcher in Bezug auf die Figuren 2 bis 5 erläutert worden ist. Zusätzlich jedoch weist das Nutzfahrzeug 12 ein Navigationssystem 80 auf, welches beispielsweise mit einem GPS-Modul ausgerüstet sein kann (nicht dargestellt). In diesem Ausführungsbeispiel lässt sich das Vorgelegegetriebe 30 auf Veranlassung des Navigationssystems 80 schalten. Hierzu veranlasst das Navigationssystem 80 die Schalteinrichtung 58 derart, dass das Vorgelegegetriebe 30 in die erste, zweite oder dritte Stufe geschaltet wird.

In der Figur 7 sind eine erste topographische Eigenschaft TE1, eine zweite topographische Eigenschaft TE2 und eine dritte topographische Eigenschaft TE3 anhand von jeweils prinzipiellen Darstellungen gezeigt. Wie eingangs erwähnt, berücksichtigen die topographischen Eigenschaften insbesondere die Steigungen einer bestimmten Strecke. Die erste topographische Eigenschaft TE1 liegt dann vor, wenn die vom Nutzfahrzeug 12 zurückzulegende Strecke vorwiegend im Flachland verläuft. Die zweite topographische Eigenschaft TE2 liegt dann vor, wenn die Strecke durch eine Mittelgebirgslandschaft führt. Entsprechend liegt die dritte topographische Eigenschaft TE3 dann vor, wenn die Strecke durch eine Hochgebirgslandschaft führt. Das Maß der Steigungen nimmt von der ersten topographischen Eigenschaft TE1 zur dritten topographischen Eigenschaft TE3 zu. Während im Flachland kaum Erhebungen vorhanden sind, liegen in einer Mittelgebirgslandschaft deutlich mehr Erhebungen vor, so dass die Steigungen im Vergleich zum Flachland ein größeres Maß annehmen. Die größten Steigungen liegen im Hochgebirge vor, so dass dort die Steigungen das größte Maß aufweisen. An dieser Stelle soll darauf hingewiesen werden, dass die topographischen Eigenschaften nicht nur auf das Maß der Steigungen begrenzt sind, sondern auch andere Eigenschaften der Strecke berücksichtigen können, welche sich auf den Kraftstoffverbrauch auswirken können. Beispielsweise können die Anzahl und die Schärfe der Kurven der zu befahrenden Straßen und des aktuellen Gewichts des Nutzfahrzeugs 12 berücksichtigt werden. So kann es durchaus sein, dass ein Streckenabschnitt der dritten topographischen Eigenschaft TE3 zugeordnet wird, obwohl dieser in einer Mittelgebirgslandschaft angeordnet ist. Dies kann beispielsweise dann der Fall sein, wenn die Straßen sehr kurvig sind und eine verhältnismäßig starke Steigung aufweisen, auch wenn die Steigung nur für eine relativ kurze Distanz vorliegt.

Aus Figur 8 lässt sich das grundlegende Vorgehen beim Verfahren zum Schalten eines Vorgelegegetriebes 30 ableiten. Es wird angenommen, dass sich das Nutzfahrzeug 12 an einem Standort S befindet, von dem aus eine Fahrt beginnen soll. Zunächst wird das Fahrziel FZ in das Navigationssystem 80 des Nutzfahrzeugs 12 eingegeben. Das Navigationssystem 80 berechnet zunächst einen Streckenverlauf, der vom aktuellen Standort S zum Fahrziel FZ führt. Darüber hinaus ermittelt das Navigationssystem 80 die topographischen Eigenschaften des Streckenverlaufs und ordnet diese einer ersten topographischen Eigenschaft TE1, einer zweiten topographischen Eigenschaft TE2 und einer dritten topographischen Eigenschaft TE3 zu, die in Figur 7 dargestellt sind. Anhand dieser Zuordnung unterteilt das Navigationssystem 80 die Fahrstrecke in entsprechend viele Streckenabschnitte.

Der erste Streckenabschnitt, der zwischen dem aktuellen Standort S und einem ersten Zwischenziel ZZ1 liegt, weist dabei die erste topographische Eigenschaft TE1 auf, da dieser Streckenabschnitt durch das Flachland führt. Zwischen dem ersten Zwischenziel ZZ1 und dem zweiten Zwischenziel ZZ2 führt die Strecke durch eine Mittelgebirgslandschaft, so dass hier die zweite topographische Eigenschaft TE2 vorliegt. Zwischen dem zweiten Zwischenziel ZZ2 und dem dritten Zwischenziel ZZ3 führt der Streckenabschnitt durch ein Hochgebirge, zwischen dem dritten und dem vierten Zwischenziel ZZ3, ZZ4 wiederum durch eine Mittelgebirgslandschaft und zwischen dem vierten Zwischenziel ZZ4 und dem Fahrziel FZ wieder durch ein Flachland. Diese Streckenabschnitte sind den entsprechenden topographischen Eigenschaften TE3, TE2 bzw. TE1 zugeordnet.

Da das Navigationssystem 80 quasi-kontinuierlich die aktuelle Position des Nutzfahrzeugs 12 entlang der Strecke ermitteln kann, erkennt das Navigationssystem 80, wenn das Nutzfahrzeug 12 einen Streckenabschnitt verlässt und in den folgenden Streckenabschnitt eintritt. An diesem Übergang von einem Streckenabschnitt zum anderen Streckenabschnitt gibt das Navigationssystem 80 ein Signal ab, welches hierauf hinweist. Dieses Signal kann beispielsweise in optischer und/oder akustischer Form ausgegeben werden, wodurch der Fahrer des Nutzfahrzeugs 12 hiervon in Kenntnis gesetzt wird. Dieser kann nun die Schalteinrichtung 58 des Vorgelegegetriebes 30 aktivieren und in die entsprechende Stufe schalten. Alternativ kann dies auch automatisch geschehen, indem das Navigationssystem 80 die Schalteinrichtung 58 direkt veranlasst. In diesem Fall muss der Fahrer nicht aktiv eingreifen. Wie oben beschrieben, umfasst das Vorgelegegetriebe 30 drei Stufen, wobei die erste Stufe der ersten topografischen Eigenschaft TE1, die zweite Stufe der zweiten topographischen Eigenschaft TE2 und die dritte Stufe der dritten topographischen Eigenschaft TE3 zugeordnet ist. Je nachdem, welcher topographischen Eigenschaft der jeweilige Streckenabschnitt zugeordnet ist, wird das Vorgelegegetriebe 30 in die entsprechende Stufe geschaltet.

Wie zuvor erwähnt, dürfen LKW eine Höchstgeschwindigkeit von 90 km/h üblicherweise nicht überschreiten. Im Flachland, wenn das Vorgelegegetriebe in die erste Stufe geschaltet ist, dreht der Motor bei einer Geschwindigkeit von 90 km/h beispielsweise in etwa mit 1040 U/min, in der zweiten Stufe mit etwa 1140 U/min und in der dritten Stufe mit etwa 1260 U/min.

Wie erwähnt, ist das Vorgelegegetriebe 30 synchronisiert, so dass das Vorgelegegetriebe 30 während der Fahrt von einer Stufe in eine andere Stufe geschaltet werden kann. Es ist aber auch möglich, nicht-synchronisierte Vorgelegegetriebe 30 zu verwenden. In diesem Fall kann das Schalten nur bei Stillstand des Nutzfahrzeugs 12 durchgeführt werden.

### Bezugszeichenliste

- 1: Motor
- 2: Kupplung
- 3: Getriebe
- 4: Antriebswelle
- 5: Ritzel
- 6: Tellerrad
- 7: Hinterachsgetriebe
- 8: Differential
- 9: Hinterachse
- 10: Antriebsstrang
- 12: Nutzfahrzeug
- 14: Motor
- 16: Kupplung
- 18: Antriebswelle
- 20: Hauptgetriebe
- 22: Hinterachsgetriebe
- 23: Hinterachse
- 24: Ritzel
- 26: Tellerrad
- 28: Differential
- 30: Vorgelegegetriebe
- 32: Vorgelegewelle
- 34: erstes Vorgelege-Zahnrad
- 36: zweites Vorgelege-Zahnrad
- 38: drittes Vorgelege-Zahnrad
- 40: erstes Antriebswellenzahnrad
- 42: zweites Antriebswellenzahnrad
- 44: drittes Antriebswellenzahnrad
- 46: Kugellager
- 48: erster Synchronring
- 50: zweiter Synchronring
- 52: dritter Synchronring
- 54: erste Schiebemuffe
- 56: zweite Schiebemuffe
- 58: Schalteinrichtung
- 60: erste Schaltachse
- 62: zweite Schaltachse
- 64: Eingangswelle
- 66: Ausgangswelle
- 68: Nabe
- 70: Außenverzahnung
- 72: Innenverzahnung
- 74: Außenverzahnung
- 76: erster Schaltschieber
- 78: zweiter Schaltschieber
- 80: Navigationssystem
- 180: Antriebsstrang

- FZ: Fahrziel
- S: Standort
- TE1: erste topographische Eigenschaft
- TE2: zweite topographische Eigenschaft
- TE3: dritte topographische Eigenschaft
- ZZ1: erstes Zwischenziel
- ZZ2: zweites Zwischenziel
- ZZ3: drittes Zwischenziel
- ZZ4: viertes Zwischenziel

## Patentansprüche

1. Nutzfahrzeug (12), umfassend
einen Antriebsstrang (10), wobei der Antriebsstrang (10) umfasst:
- einen Motor (14),
- eine vom Motor (14) antreibbare oder angetriebene Antriebswelle (18),
- ein mit der Antriebswelle (18) zusammenwirkendes Hauptgetriebe (20), und
- ein Hinterachsgetriebe (22), welches mit der Antriebswelle (18) zusammenwirkt und die Drehbewegung der Antriebswelle (18) auf zumindest zwei Hinterachsen (23) des Antriebsstrangs (10) überträgt,
- ein mit der Antriebswelle (18) zusammenwirkendes Vorgelegegetriebe (30), wobei
- das Vorgelegegetriebe (30) zwischen dem Hauptgetriebe (20) und dem Hinterachsgetriebe (22) angeordnet ist und mindestens zwei Stufen hat, welche mit einer Schalteinrichtung (58) zum Verändern der Hinterachsübersetzung schaltbar sind,
**dadurch gekennzeichnet, dass** das Nutzfahrzeug (12) ein Navigationssystem (80) umfasst, welches eingerichtet ist, die topographische Eigenschaft der Umgebung des Nutzfahrzeugs (12) zu ermitteln und einen vom aktuellen Standort (S) des Nutzfahrzeugs (12) zum in das Navigationssystem (80) eingegebene Fahrziel (FZ) führenden Streckenverlauf in Unterabschnitte zu unterteilen, welche einer ersten topographischen Eigenschaft, einer zweiten topographischen Eigenschaft und einer dritten topographischen Eigenschaft zugeordnet sind, wobei das Navigationssystem (80) entweder eingerichtet ist, um beim Übertritt von einem Unterabschnitt in den nächsten ein Signal an den Fahrer zu übermitteln, so dass dieser das Vorgelegegetriebe (30) unter Verwendung der Schalteinrichtung (58) schaltet, oder das Navigationssystem (80) eingerichtet ist, die Betätigung der Schalteinrichtung (58) automatisch vorzunehmen, wenn das Nutzfahrzeug (12) einen Unterabschnitt verlässt und in den folgenden eintritt.

2. Nutzfahrzeug (12) nach Anspruch 1,
**dadurch gekennzeichnet, dass** das Vorgelegegetriebe (30) ein Übersetzungsverhältnis zwischen der Antriebswelle (18) und den Hinterachsen (23) von zwischen 1:2 und 1:4,5 bereitstellt.

3. Nutzfahrzeug (12) nach einem der Ansprüche 1 oder 2,
**dadurch gekennzeichnet, dass** das Vorgelegegetriebe (30) eine erste Stufe, eine zweite Stufe und eine dritte Stufe aufweist, wobei
- bei einer ersten Variante des Vorgelegegetriebes (30)
o die erste Stufe ein Übersetzungsverhältnis von 1:2,21
o die zweite Stufe ein Übersetzungsverhältnis von 1:2,38 und
o die dritte Stufe ein Übersetzungsverhältnis von 1:2,47 und
- bei einer zweiten Variante des Vorgelegegetriebes (30)
o die erste Stufe ein Übersetzungsverhältnis von 1:2,38
o die zweite Stufe ein Übersetzungsverhältnis von 1:2,47 und
o die dritte Stufe ein Übersetzungsverhältnis von 1:2,64,
- jeweils zwischen der Antriebswelle (18) und den Hinterachsen (23) bewirken.

4. Nutzfahrzeug (12) nach einem der vorherigen Ansprüche, **dadurch gekennzeichnet, dass** die Stufen des Vorgelegegetriebes (30) mittels Synchronringen (40, 50) synchronisiert sind.

5. Verfahren zum Schalten des Vorgelegegetriebes des Antriebsstrangs (10) des Nutzfahrzeugs (12) nach einem dem Ansprüche 1 bis 4, umfassend folgende Schritte:
- Eingeben eines Fahrziels (FZ) in das Navigationssystem (80),
- Berechnen eines vom aktuellen Standort (S) des Nutzfahrzeugs (12) zum Fahrziel (FZ) führenden Streckenverlaufs mittels des Navigationssystems (80),
- Ermitteln der topographischen Eigenschaften des Streckenverlaufs und Unterteilen des Streckenverlaufs in Unterabschnitte, welche einer ersten topographischen Eigenschaft, einer zweiten topographischen und einer dritten topographischen Eigenschaft zugeordnet sind mittels des Navigationssystems (80), und
- entweder Übermitteln eines Signals an den Fahrer durch das Navigationssystem (80) beim Übertritt von einem Unterabschnitt in den nächsten, so dass dieser das Vorgelegegetriebe (30) unter Verwendung der Schalteinrichtung (58) schaltet,
- oder automatisches Betätigen der Schalteinrichtung (58) durch das Navigationssystem (80), wenn das Nutzfahrzeug (12) einen Unterabschnitt verlässt und in den folgenden eintritt,
so dass ein Schalten des Vorgelegegetriebes (30) mittels der Schalteinrichtung (58) in Abhängigkeit der ermittelten topographischen Eigenschaften erfolgt, bei dem der Schritt des Schaltens des Vorgelegegetriebes (30) mittels der Schalteinrichtung (58) auf Veranlassung des Navigationssystems (80) durchgeführt wird.

## Claims

1. Commercial vehicle (12), comprising a power train (10), where the power train (10) comprises:
- a motor (14),
- a drive shaft (18) being either drivable or driven by a motor (14),
- a main transmission (20) that works together with the drive shaft (18), and
- a rear axle transmission (22) that works together with the drive shaft (18) and transfers the rotary movement of the drive shaft (18) to at least two rear axles (23) of the power train (10),
- an intermediate transmission (30) that works together with the drive shaft (18), whereby the intermediate transmission (30) has been assigned between the main transmission (20) and the rear axle transmission (22) and has at least two stages, which can be changed using a shifter (58),
**characterised in that**
the commercial vehicle (12) comprises a navigation system (80), which is set up to determine the topographical property of the surroundings of the commercial vehicle (12) and to subdivide a route, leading from the current location (S) of the commercial vehicle (12) to the destination (FZ) entered into the navigation system (80), into subsections which are assigned to a first topographical property, a second topographical property and a third topographical property, where the navigation system (80) is either set up to transmit a signal to the driver when crossing from one sub-section to the next, so that he shifts the intermediate transmission (30) using the shifter (58), or the navigation system (80) is set up to automatically actuate the shifter (58) when the commercial vehicle (12) exits a subsection and enters the next.

2. Commercial vehicle (12), according to claim 1,
**characterised in that** the intermediate transmission (30) has a conversion ratio between the drive shaft (18) and the rear axles (23) of between 1:2 and 1:4.5.

3. Commercial vehicle (12) according to one of claims 1 or 2,
**characterised in that** the intermediate transmission (30) has an initial stage, a secondary stage and a tertiary stage, whereby
- for a first variation of the intermediate transmission (30)
o the initial stage has a conversion ratio of 1:2.21
o the secondary stage has a conversion ratio of 1:2.38 and
o the tertiary stage has a conversion ratio of 1:2.47 and
- for a second variation of the intermediate transmission (30)
o the initial stage has a conversion ratio of 1:2.38
o the secondary stage has a conversion ratio of 1:2,47 and
o the tertiary stage has a conversion ratio of 1:2.64,
- each effective between the drive shaft (18) and the rear.

4. Commercial vehicle (12) according to one of the preceding claims,
**characterised in that** the stages of the intermediate transmission (30) are synchronised by means of synchronising rings (40, 50).

5. Switching procedure of the intermediate transmission of the power train (10) of the commercial vehicle (12) according to one of the Claims 1 to 4, comprising the following steps:
- Enter a destination (FZ) in the navigation system (80),
- Calculate a route from the current location (S) of the commercial vehicle (12) to the destination (FZ), by means of the navigation system (80),
- Determine the topographical properties of the route and subdivisions of the route into subsections, which correspond to a first topographical property, a second topographical property and a third topographical property by means of the navigation system (80), and
- either transmitting a signal to the driver through the navigation system (80) when crossing from one subsection to the next, so that he can switch the intermediate transmission (30) by using the shifter (58),
- or automatically actuate the shifter (58) through the navigation system (80), when the commercial vehicle (12) leaves a subsection and enters the following one, so that an intermediate transmission (30) is shifted by means of the shifter (58) as a function of the determined topographical properties, in which the step of shifting the intermediate transmission (30) by means of the shifter (58) is carried out at the instigation of the navigation system (80).

## Revendications

1. Véhicule utilitaire (12), comprenant
un groupe motopropulseur (10), le groupe motopropulseur comprenant :
- un moteur (14),
- un arbre de transmission (18) entraîné ou pouvant être entraîné par le moteur (14),
- une transmission principale (20) fonctionnant en coopération avec l'arbre de transmission (18), et
- une transmission de pont arrière (22) qui fonctionne en coopération avec l'arbre de transmission (18) et transmet le mouvement rotatif de l'arbre de transmission (18) à au moins deux essieux arrières (23) du groupe motopropulseur (10),
- une transmission intermédiaire (30) fonctionnant en coopération avec l'arbre de transmission (18),
- la transmission intermédiaire (30) étant disposée entre la transmission principale (20) et la transmission de pont arrière (22) et comportant au moins deux vitesses qui peuvent être changées à l'aide d'un dispositif de commutation (58) pour la modification du rapport de pont arrière,
**caractérisé en ce que** le véhicule utilitaire (12) comprend un système de navigation (80) qui est destiné à déterminer la propriété topographique de l'environnement du véhicule utilitaire (12) et à subdiviser un itinéraire conduisant à la destination (FZ) entrée dans le système de navigation (80), à partir de l'emplacement actuel (S) du véhicule utilitaire (12), en sous-sections qui sont affectées à une première propriété topographique, une deuxième propriété topographique et une troisième propriété topographique,
soit le système de navigation (80) étant conçu pour transmettre un signal au conducteur lors du passage d'une sous-section à la suivante, de manière que ce dernier change la transmission intermédiaire (30) en utilisant le dispositif de commutation (58), soit le système de navigation (80) est conçu pour effectuer automatiquement l'actionnement du dispositif de commutation (58) lorsque le véhicule utilitaire (12) quitte une sous-section et entre dans une la suivante.

2. Véhicule utilitaire (12), selon la revendication 1,
**caractérisé en ce que** la transmission intermédiaire (30) fournit un rapport de transmission entre l'arbre d'entraînement (18) et les essieux arrière (23) compris entre 1:2 et 1:4.5.

3. Véhicule utilitaire (12), selon l'une quelconque des revendications 1 et 2,
**caractérisé en ce que** la transmission intermédiaire (30) comporte une première vitesse, une deuxième vitesse et une troisième vitesse,
- dans une première variante de la transmission intermédiaire (30)
o la première vitesse réalise un rapport de transmission de 1:2,21
o la deuxième vitesse réalise un rapport de transmission de 1:2,38 et
o la troisième vitesse réalise un rapport de transmission de 1:2,47 et
- dans une deuxième variante de la transmission intermédiaire (30)
o la première vitesse réalise un rapport de transmission de 1:2,38
o la deuxième vitesse réalise un rapport de transmission de 1:2,47
o la troisième vitesse réalise un rapport de transmission de 1:2,64,
- chaque fois entre l'arbre de transmission et les essieux arrière (23).

4. Véhicule utilitaire (12), selon l'une quelconque des revendications précédentes , **caractérisé en ce que** les vitesses de la transmission intermédiaire (30) sont synchronisées au moyen de bagues de synchronisation (40, 50).

5. Procédé pour la commutation de la transmission intermédiaire du groupe motopropulseur (10) du véhicule utilitaire (12) selon l'une quelconque des revendications 1 à 4, comprenant les étapes suivantes :
- entrée d'une destination (FZ) dans le système de navigation (80),
- calcul d'un itinéraire conduisant à la destination (FZ) à partir de la position actuelle (S) du véhicule utilitaire (12), à l'aide du système de navigation (80),
- détermination des propriétés topographiques de l'itinéraire et subdivision de l'itinéraire en sous-sections qui sont attribuées à une première propriété topographique, une deuxième propriété topographique et une troisième propriété topographique, au moyen du système de navigation (80), et
- soit transmission d'un signal au conducteur par le système de navigation (80) lors du passage d'une sous-section à la suivante, de manière que ce dernier change la transmission intermédiaire (30) à l'aide du dispositif de commutation (58),
- soit actionnement du dispositif de commutation (58) par le système de navigation (80), lorsque le véhicule utilitaire (12) quitte une sous-section et entre dans la suivante,
de sorte qu'un changement de la transmission intermédiaire (30) a lieu au moyen du dispositif de commutation (58) en fonction des propriétés topographiques déterminées, dans lequel l'étape du changement de la transmission intermédiaire (30) au moyen du dispositif de commutation (58) est effectuée à l'initiative du système de navigation (80).
